# EUROPEAN PATENT APPLICATION

(11) **EP 4 553 015 A1**
(43) Date of publication of application: **14.05.2025**
(21) Application number: 22952830.2
(22) Date of filing: 24.11.2022
(51) Int. Cl.: B65G 47/91, B65G 1/137, B66F 9/18

(54) **TRANSPORT DEVICE, TRANSPORT ROBOT AND WAREHOUSING SYSTEM**

(30) Priority: 25.07.2022 CN 202210876803; 25.07.2022 CN 202221923064 U
(71) Applicant: Wuxi Quicktron Intelligent Technology Co., Ltd, Wuxi, Jiangsu 214000 (CN)
(72) Inventor: LIU, Pulin, Shanghai 200435 (CN); FANG, Shixue, Shanghai 200435 (CN); LI, Shuni, Shanghai 200435 (CN); LIU, Sixing, Shanghai 200435 (CN); WANG, Xinhao, Shanghai 200435 (CN); NI, Fei, Shanghai 200435 (CN)
(74) Representative: Papula Oy
(86) International application number: PCT/CN2022/133952
(87) International publication number: WO 2024/021395

(57) **Abstract**

A transfer device, a transfer robot and a warehousing system. The transfer device includes: a base plate (800), a mounting plate (100), and a retractable mechanism (200), a fixing plate (300), a suction cup (310), a drive assembly (500), and a support assembly (900). The mounting plate (100) is disposed on the base plate (800). The retractable mechanism (200) is disposed on the mounting plate (100) and is retractable in the first direction. The fixing plate (300) is disposed on a side of the retractable mechanism (200) away from the installation plate (100). The suction cup (310) is disposed on the fixing plate (300). The drive assembly (500) is disposed on the base plate (800) and is connected to the retractable mechanism (200). The support assembly (900) is disposed on the base plate (800) to support a bin (810) suctioned by the suction cup (310). By means of cooperation of the drive assembly (500), the retractable mechanism (200), and the suction cup (310), the bin (810) can be transferred by suctioning a side of the bin (810). Therefore, when the bin (810) is placed, it is not necessary to reserve a gap used for clamping the bin (810), and only a certain interval is required between adjacent bins (810). In this way, storage density of the bins (810) in the warehouse is increased, and a storage capacity per unit area is increased, thereby effectively improving space utilization of warehouse.

## Description

The present disclosure claims the benefit of Chinese patent application No. 202210876803.8, filed with the Chinese Patent Office on July 25, 2022, the disclosure of which is hereby incorporated herein by reference.

The present disclosure claims the benefit of Chinese patent application No. 202221923064.5, filed with the Chinese Patent Office on filed July 25, 2022, the disclosure of which is hereby incorporated herein by reference.

### TECHNICAL FIELD

The present disclosure relates to a technical field of storage and transfer of bins, for example, to a transfer device, a transfer robot, and a warehousing system.

### BACKGROUND

Warehouse storage is an important part of factory operation. The placement of goods, space utilization, delivery speed, and delivery accuracy are important aspects. To improve storage quality of a warehouse, a transfer robot is gradually popularized and applied.

In a related technology, a transfer robot includes a moving mechanism and a clamping mechanism. The moving mechanism is configured to drive the transfer robot to move, and the clamping mechanism generally uses a structure such as a jaw, so as to complete clamping of a goods by holding the goods from outside of the goods.

In the case of transfer for boxed goods, if the boxed goods are picked up in a clamping mode, a sufficient gap around the goods is required to be reserved in advance. This leads to a low density of the goods stored in the warehouse and a decrease in the storage capacity per unit area, which is not benefit to improving the space utilization of the warehouse.

### SUMMARY

The present disclosure provides a transfer device, a transfer robot, and a warehousing system, so as to resolve a problem that a relatively large gap is reserved for convenience of clamping when storing bins in a related technology, which causes a decrease in a storage capacity per unit area of a warehouse and a relatively low space utilization of a warehouse.

The transfer device provided in the present disclosure includes a base plate, a mounting plate, a retractable mechanism, a fixing plate, a suction cup, a drive assembly, and a support assembly. The mounting plate is disposed on the base plate; the retractable mechanism is disposed on the mounting plate and is retractable in a first direction. The fixing plate is disposed on a side of the retractable mechanism away from the mounting plate; the suction cup is disposed on the fixing plate for suctioning a bin; and the drive assembly is disposed on the base plate and connected to the retractable mechanism, so as to drive the retractable mechanism to be retractable. The support assembly is disposed on the base plate to support the bin suctioned by the suction cup.

The present disclosure further provides a transfer robot, including a mounting rack; and the transfer device according to any one of the foregoing descriptions. The transfer device is disposed on the mounting rack.

The present disclosure further provides a warehousing system, including a warehouse; and the transfer robot according to any one of the foregoing descriptions. The transfer robot is disposed in the warehouse.

### BRIEF DESCRIPTIONOF DRAWINGS

FIG. 1 is a schematic structural diagram of a transfer device according to some embodiments of the present disclosure.
FIG. 2 is a schematic structural diagram of a bin being supported in the transfer device according to some embodiments of the present disclosure.
FIG. 3 is a schematic structural diagram of a retractable mechanism of a transfer device when the retractable mechanism is extended according to some embodiments of the present disclosure.
FIG. 4 is an enlarged view of part A in the implementation shown in FIG. 3.
FIG. 5 is a schematic structural diagram of a pressing assembly in a transfer device according to some embodiments of the present disclosure.
FIG. 6 is a sectional view of a transfer device according to some embodiments of the present disclosure.
FIG. 7 is a schematic structural diagram of a drive assembly in a transfer device according to some embodiments of the present disclosure.
FIG. 8 is a schematic structural diagram of a support assembly in a transfer device according to some embodiments of the present disclosure.
FIG. 9 is a schematic cross-sectional structural diagram of a support assembly in a transfer device according to some embodiments of the present disclosure.
FIG. 10 is a schematic structural diagram of a stop plate and a base plate in a transfer device according to some embodiments of the present disclosure.
FIG. 11 is a schematic structural diagram of a transfer robot according to some embodiments of the present disclosure.
FIG. 12 is a schematic structural diagram of a transfer robot with a dust cover in some embodiments of the present disclosure.
FIG. 13 is a schematic structural diagram of a warehousing system according to some embodiments of the present disclosure.
FIG. 14 is an enlarged schematic diagram of a partial structure in a warehousing system according to some embodiments of the present disclosure.
FIG. 15 is a schematic structural diagram of a shelf of a warehousing system according to some embodiments of the present disclosure.
FIG. 16 is a schematic structural diagram of a relatively long extension length of a retractable mechanism in a warehousing system according to some embodiments of the present disclosure.
FIG. 17 is a schematic structural diagram of a relatively short extension length of a retractable mechanism in a warehousing system according to some embodiments of the present disclosure.

**In** the figures:
100 mounting plate; 101 slide rail; 102 slider; 200 retractable mechanism; 210 slide guide; 220 first retractable unit; 230 second retractable unit; 231 diagonal rod; 232 straight rod; 233 sleeve; 240 connecting rod; 250 retractable rod; 260 top rod; 300 fixing plate; 310 suction cup; 400 shelf; 410 storage layer; 420 cache layer; 500 drive assembly; 510 drive member; 520 drive chain; 530 connection block; 540 rotary wheel; 600 pressing assembly; 610 pressing plate; 620 pressing rod; 630 elastic member; 640 pressing part; 641 pressing block; 642 roller; 650 U-shaped rack; 660 pull plate; 700 push rod; 800 base plate; 810 bin; 820 support rack; 900 support assembly; 910 support rack; 920 support roller; 930 baffle; 940 stop plate; 941 abutment block; 950 baffle plate; 960 stop rod; 970 toggle; 971 rolling wheel; 980 elastic stopper; X first direction; 1001 mounting rack; 1002 mobile trolley; 1003 fixing rack; 1004 storage plate; 1005 dust cover.

### DETAILED DESCRIPTION OF EMBODIMENTS

In the description of the present disclosure, unless otherwise explicitly stipulated and limited, terms "connecting", "connected" and "fix" should be understood in a broad sense. For example, it can be a fixed connection, a detachable connection, or an integral body. It can be a mechanical connection or an electrical connection. It can be a direct connection or an indirect connection through an intermediate medium. It can be an internal connection between two elements or an interaction between two elements. For those skilled in the art, the meanings of the above terms in the present disclosure can be understood according to the circumstances.

In the present disclosure, unless otherwise explicitly stated and limited, a first feature being "above" or "below" a second feature may include the first and second features contacting directly, or may also include the first and second features not contacting directly, but contacting through additional feature. Furthermore, the first feature being "on", "above" and "over" the second feature includes the first feature being directly above and diagonally above the second feature, or simply means that the horizontal height of the first feature is higher than that of the second feature. The first feature being "below", "under" and "lower" the second feature includes the first feature being directly below and diagonally below the second feature, or simply means that the horizontal height of the first feature is less than that of the second feature.

In the description of this embodiment, the orientation or positional relationship, such as the terms "upper", "lower", "right", etc., are based on the orientation or positional relationship shown in the drawings, and are only for convenience of description and simplified operation, rather than indicating or implying that the device or element referred to must have a specific orientation, be constructed and operated in a specific orientation, and therefore should not be construed as a limitation on the present disclosure. In addition, the terms "first" and "second" are merely used to distinguish the description, and have no specific meaning.

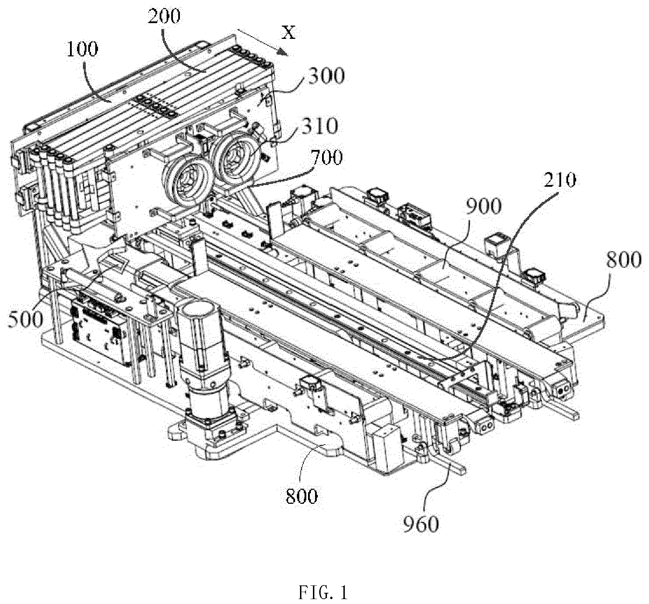

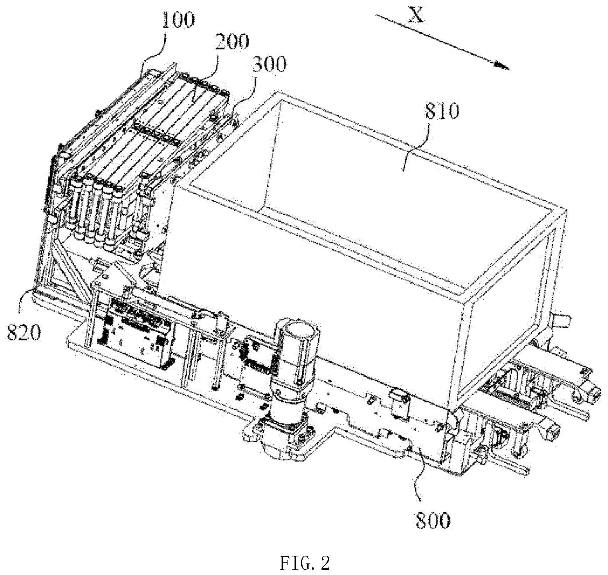

FIG. 1 shows a schematic structural diagram of a transfer device in some embodiments of the present disclosure. FIG. 2 is a schematic structural diagram of a bin being supported in the transfer device in some embodiments of the present disclosure. Referring to FIGS. 1 and 2, the transfer device includes: a mounting plate 100, a retractable mechanism 200, a fixing plate 300, a suction cup 310, a drive assembly 500, a support assembly 900 and a base plate 800. The mounting plate 100 is disposed on the base plate 800. The retractable mechanism 200 is disposed on the mounting plate 100 and can retract or extend along a first direction X. The fixing plate 300 is disposed on the retractable mechanism 200. The suction cup 310 is disposed on the fixing plate 300. The drive assembly 500 is connected to the retractable mechanism 200 to drive the retractable mechanism 200 to retract or extend. The support assembly 900 is disposed on the base plate 800 for supporting a bin 810 suctioned by the suction cup 310.

For example, the base plate 800 may be disposed on a moving mechanism to drive the entire device to move. The base plate 800 can slide on the moving mechanism in a vertical direction, so as to correspond to the bins 810 in different locations. The bin 810 refers to a polygonal material with a certain size. The bin 810 may be a box containing materials or a box-like material, etc.

A support rack 820 can be fixed on a top wall of the base plate 800 by welding or bolting connection. The support rack 820 may include structures such as a support plate and a plurality of triangular reinforcing ribs. The mounting plate 100 is fixed on the support rack 820. The mounting plate 100 and the fixing plate 300 are both in the shape of rectangular thin plates and are disposed oppositely. The retractable mechanism 200 is disposed between the mounting plate 100 and the fixing plate 300. The first direction X is a direction in which the fixing plate 300 is away from or close to the mounting plate 100. The drive assembly 500 may be located below the retractable mechanism 200, and the drive assembly 500 may be operated along the first direction X to drive the retractable mechanism 200 to retract or extend in the first direction X. The suction cup 310 is fixedly disposed on a side of the fixing plate 300 away from the mounting plate 100, and the suction cup 310 is disposed toward the bin 810. Two suction cups 310 may be disposed, and the two suction cups 310 are located side by side on the fixing plate 300. It should be understood that one, three or more suction cups 310 can also be disposed. For example, it can be designed according to the sizes of the fixing plate 300 and the bin 810. The two suction cups 310 can be located in the middle of the fixing plate 300, or can be located on both sides of the fixing plate 300. For example, the positions of the suction cups 310 can be designed according to the position of the bin 810 to be suctioned. The present disclosure does not limit the number and the position of the suction cups 310.

The support assembly 900 is disposed on the base plate 800 and is located below the retractable mechanism 200. The support assembly 900 may be of a symmetrical structure, and the retractable mechanism 200 is in the middle of the support assembly 900, so that when the retractable mechanism 200 retracts, the bin 810 is pulled into the support assembly 900, and a bottom wall of the bin 810 may abut against a top of the support assembly 900, thereby transferring the bin 810 above the base plate 800.

When the bin 810 is transferred by using the transfer device, the base plate 800 is moved to a position of the bin 810 to be transferred by using the transfer device, so that the suction cups 310 correspond to the bin 810. The retractable mechanism 200 is driven to extend in the first direction X by the drive assembly 500, so as to push the fixing plate 300 and the suction cups 310 close to the bin 810. After the suction cups 310 are attached to the bin 810, a side of the bin 810 is suctioned by the suction cups 310. The retractable mechanism 200 is driven to retract by using the drive assembly 500, so that the bin 810 is pulled out in the first direction X. After the bin 810 is removed from a shelf, the bin 810 can directly fall on the support assembly 900, and moves with movement of the base plate 800. In this way, by means of cooperation of the drive assembly 500, the retractable mechanism 200, and the suction cups 310, the bin 810 can be transferred by suctioning the side of the bin 810. Therefore, when the bin 810 is placed, it is not necessary to reserve a gap used for clamping the bin, and only a certain interval is required between adjacent bins. In this way, storage density of the bins 810 in the warehouse is increased, and a storage capacity per unit area is increased, thereby effectively improving utilization of warehouse space.

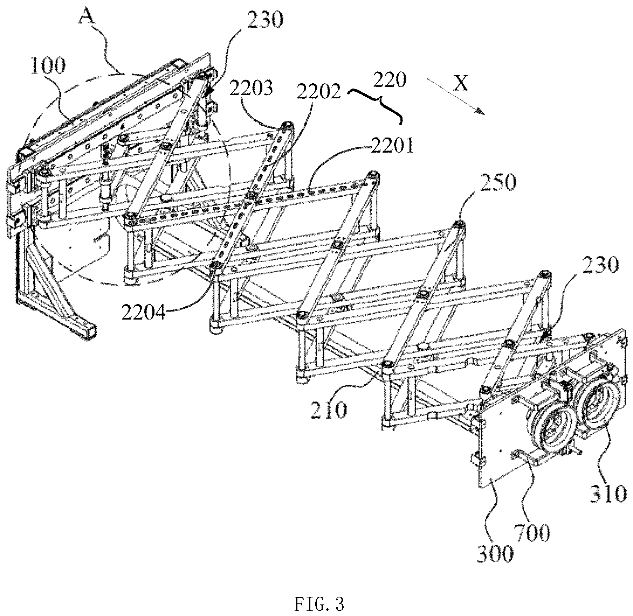

FIG. 3 is a schematic structural diagram of the retractable mechanism of a transfer device when the retractable mechanism is extended according to some embodiments of the present disclosure. Referring to FIG. 3, in some embodiments of the present disclosure, the retractable mechanism 200 includes a slide guide 210 and a plurality of retractable units. The slide guide 210 extends in the first direction. The plurality of retractable units are slidably connected to the slide guide 210, and two adjacent retractable units are hinged.

The plurality of retractable units are divided into a plurality of first retractable units 220 and two second retractable units 230. The plurality of first retractable units 220 are located between the two second retractable units 230. One of the second retractable units 230 is movably connected to the mounting plate 100 and the other is movably connected to the fixing plate 300.

For example, the slide guide 210 is located below the mounting plate 100 and the fixing plate 300, and a length of the slide guide 210 is correspondingly adjusted according to a distance that the fixing plate 300 needs to move in the first direction X. The plurality of retractable units are distributed along the first direction X, and each of the retractable units can be retractable along the first direction X by a certain length. The extended length may be consistent, or may be inconsistent, for example, it may be designed according to an actual application requirement. The retractable unit near the mounting plate 100 or the fixing plate 300 serves as the second retractable units 230, and the remaining retractable units serve as the first retractable units 220. For example, three or more first retractable units 220 may be disposed. A quantity of first retractable units 220 may be designed according to a total required extension length of the retractable mechanism 200, and it is not limited in the present disclosure. The second retractable unit 230 may be slidably connected to the mounting plate 100 or the fixing plate 300 by using a hinged slider, so that the second retractable unit 230 could be movably connected to the mounting plate 100 or the fixing plate 300.

When the retractable mechanism 200 needs to be retracted or extended, the plurality of retractable units slide on the slide guide 210, and each of the retractable units extends or retracts in the first direction X, so that the whole retractable mechanism 200 extends or retracts in the first direction X.

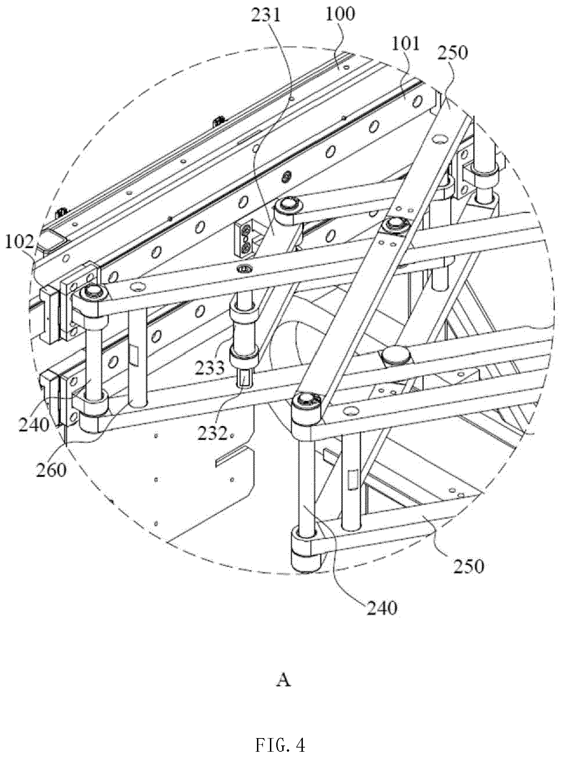

FIG. 4 is an enlarged view of part A in the implementation shown in FIG. 3.

Referring to FIG. 3, in some embodiments of the present disclosure, each of the retractable units includes two retractable racks and a connecting rod 240. The two retractable racks are disposed opposite to each other, and each of the retractable racks includes a first side part 2201 and a second side part 2202 that are staggered. The connecting rod 240 is disposed on the first side parts of the retractable racks, and the connecting rod 240 is hinged to the second side parts of adjacent retractable racks. The first side parts of the plurality of retractable units are distributed in the first direction X, and the second side parts of the plurality of retractable units are distributed in the first direction X.

For example, the two retractable racks of each retractable unit are disposed opposite to each other in a vertical direction, and each of the first side part 2201 and the second side part 2202 of each retractable rack include a first end 2203 and a second end 2204. The first end 2203 and the second end 2204 are respectively located on both sides of the slide guide 210, and the first end 2203 and the second end 2204 may rotate toward a side close to or away from the slide guide 210, so that the retractable racks can extend or retract in the first direction X. The connecting rod 240 is disposed in the vertical direction. A top end and a bottom end of the connecting rod 240 are respectively rotatably connected to the two retractable racks, and the respective connecting rods 240 are disposed at both ends of the first side part 2201. In this embodiment, two retractable racks are disposed in each of the retractable units, and the first side parts of the two retractable racks of each of the retractable units are connected together by using two connecting rods 240.

When the retractable units are retracted or extended, the connecting rods 240 are pulled to slide along the slide guide 210, so as to make the first end 2203 and the second end 2204 of the first side part 2201 to rotate toward a side close to or away from the slide guide 210, so that the retractable racks are retracted or extended in the first direction X, and therefore the retractable units smoothly completes retraction or extension.

In some embodiments of the present disclosure, the first side part 2201 and the second side part 2202 respectively include a retractable rod 250, and each retractable rack includes two retractable rods 250. The two retractable rods 250 are interleaved and connected rotatably. One connecting rod 240 is disposed at one end of each retractable rod 250, the other end of the retractable rod 250 is hinged to a connecting rod 240 of an adjacent retractable unit, and two connecting rods 240 at two ends of the retractable rod 250 are respectively located on two sides of the slide guide 210.

For example, there is a certain angle between an extension direction of the retractable rod 250 and the first direction X. The angle varies with the extension and retraction of the retractable mechanism 200, and a change range of the angle is generally less than 90 °. A side of the two crossed retractable rods 250 towards the fixing plate 300 is a first side of the retractable unit to which the two crossed retractable rods belong, and a side of the two crossed retractable rods 250 backwards the fixing plate 300 is a second side of the retractable unit. Therefore, when a first end of one of the two retractable rods 250 is located on the first side of the retractable unit, a second end of the retractable rod 250 is located on the second side of the retractable unit. A second end of the retractable rod 250 is rotatably connected to a corresponding connecting rod 240 at a first side of an adjacent retractable unit, and therefore, the plurality of retractable units may be crossed and connected in series.

The two retractable rods 250 of each retractable rack are interleaved, one of the retractable rods 250 is above, and the other is below. A rotary rod is disposed in the interleaved position of the two retractable rods 250, so that the two retractable rods 250 are rotatably connected together. The rotary rod is located directly above the sliding rail 210. A position of the rotary rod relative to the retractable rod 250 may be designed according to an actual extension length that needs to be met. For example, in this embodiment, the rotary rod is located in a middle of the retractable rod 250, so that a retractable process of the entire retractable rack remains relatively uniform and stable. Certainly, it may also be located in another position of the retractable rod 250, for example, two-thirds of the length of the retractable rod 250, which is not limited in the present disclosure.

When the retractable rack is retracted or extended, one end of the retractable rod 250 located on the first side of the current retractable unit is pulled by the connecting rod 240 of the previous retractable unit, so that the retractable rod 250 rotates around the rotary rod. Two ends of the retractable rod 250 rotate around the rotary rod and close to the sliding rail 210 at the same time. Therefore, the retractable rod 250 of the latter retractable unit is pulled to be rotated. When the retractable rod 250 is close to the slide guide 210, an angle between the retractable rod 250 and the slide guide 210 decreases, and a length of the retractable rod 250 in the first direction X increases, so that the retractable rack extends integrally. Similarly, when the retractable rod 250 is away from the slide guide 210, the retractable rack retracts.

Referring to FIG. 4, in some embodiments of the present disclosure, slide rails 101 are disposed on sides of the mounting plate 100 and the fixing plate 300 opposite to each other. Both the mounting plate 100 and the fixing plate 300 are disposed with two slide rails 101, and the two slide rails 101 are spaced apart in a vertical direction. The two slide rails 101 are corresponding to the two retractable racks of the second retractable unit 230. Each slide rail 101 is slidably connected to two sliders 102, and a hinged seat is disposed on the slider 102, and the two hinged seats are respectively connected to the two retractable roses 250 that are distributed vertically. For example, the connecting rods 240 may be disposed on both the first side and the second side of the second retractable unit 230. An ear seat is disposed on a side surface of the slider 102 to serve as a hinged seat. Both upper and lower ends of the connecting rod 240 are respectively penetrated into ear seats of the upper and lower two sliders 102, and the connecting rod 240 is rotabaly connected to the ear seats. When the second retractable unit 230 is retracted or extended, the slider 102 may be slid on the slide rail 101 by the connecting rod 240, so that the retractable rods 250 of the second retractable unit 230 can rotate smoothly. It should be understood that the connection of the slider 102 to the retractable rod 250 may also be implemented by using a hinged seat of another structure. A specific structure of the hinged seat is not limited in the present disclosure.

Referring to FIG. 4, in some embodiments of the present disclosure, the second retractable unit 230 further includes diagonal rods 231. One end of the diagonal rod 231 is hinged to the fixing plate 300 or the mounting plate 100, and the other end of the diagonal rod 231 is hinged to the retractable rod 250. For example, a pull rod is hinged on a side of the mounting plate 100 opposite to the fixing plate 300, and a pull rod also is hinged on a side of the fixing plate 300 opposite to the mounting plate 100. The other end of the pull rod is slanted to extend as the diagonal rod 231. A rotation shaft in a vertical direction may be fixed on the side of the mounting plate 100, and the rotation shaft may be located between two slide rails 101. One end of the diagonal rod 231 is sleeved in the rotation shaft, and the other end may be hinged to a position at a quarter length of the retractable rod 250 by using a hinge. It may be disposed plurality of diagonal rods, and each retractable rod 250 of the second retractable unit 230 is corresponding to one diagonal rod 231.

It should be understood that, in this embodiment, a middle position of the retractable rod 250 is located above the slide guide 210, and therefore, a quarter length is exactly a middle position of the retractable rod 250 on a side of the slide guide 210. When a requirement of the extension length changes, so that a middle position of the retractable rod 250 is not above the slide guide 210, a corresponding connection position of the diagonal rod 231 and the retractable rod 250 may also be correspondingly adjusted, provided that movements of the retractable on both sides of the slide guide 210 can be performed in synchronization.

By disposing the diagonal rod 231, when the second retractable unit 230 is extended or retracted, the diagonal rod 231 can tighten both sides of the retractable rod 250, so that the diagonal rod 250 can rotate evenly on the left and right sides. Therefore, the whole retractable mechanism 200 can extend evenly. In particular, during transferring a bin, in the extension or retraction process of the second retractable unit 230, when the fixing plate 300 is subjected to a lateral force due to a collision or another reason, the diagonal rod 231 can ensure that the second retractable unit 230 is extended or retracted in the first direction X without tilting, so that the entire retractable mechanism 200 does not tilt, thereby effectively improving stability of the retractable mechanism 200.

Referring to FIG. 4, in some embodiments of the present disclosure, the second retractable unit 230 further includes a straight rod 232 and a sleeve 233. The straight rod 232 is disposed between two opposite retractable racks. The sleeve 233 is sleeved on the straight rod 232 and rotably connected to the straight rod 232. An end wall of the diagonal rod 231 is fixedly connected to the sleeve 233.

For example, the straight rod 232 is disposed in a vertical direction and two straight rods 232 are disposed. The two straight rods 232 are respectively located on two sides of the slide guide 210, and a top end and a bottom end of the straight rod 232 are respectively fixed to the two retractable rods 250. In this embodiment, a connection position between the straight rod 232 and the retractable rod 250 is a quarter length of the retractable rod 250. In other embodiments, the straight rod 232 may also be located in another position of the retractable rod 250.

The sleeve 233 extends in a vertical direction and is sleeved on the straight rod 232. The sleeve 233 and the straight rod 232 may be rotatably connected by using a bearing or the like, or may be rotatably connected by using a slot or the like. This is not limited in the present disclosure. Two diagonal rods 231 may be disposed on each sleeve 233, and the two diagonal rods 231 are distributed at intervals in a vertical direction.

When the second retractable unit 230 is extended or retracted, the diagonal rods 231 can pull the sleeve 233 to move on both upper and lower sides at the same time, the sleeve 233 can pull the straight rod 232 to move, and the straight rod 232 can drive the retractable rods 250 of the two retractable racks to move at the same time, so as to ensure synchronous movement between the plurality of retractable rods 250, and therefore the whole retractable mechanism 200 can be stably extended or retracted.

Referring to FIG. 4, in some embodiments of the present disclosure, the retractable units further includes a top rod 260. The top rod 260 is disposed between the two retractable racks of the retractable unit. For example, an axis of the top rod 260 is parallel to an axis of the connecting rod 240, and the top rod 260 is disposed close to the connecting rod 240. Each connecting rod 240 is correspondingly disposed with a top rod 260, and the top rod 260 is fixedly connected to the two retractable rods 250. It should be understood that at least two top rods 260 may be disposed at each of the connecting rods 240, and a specific interval may be maintained between the top rods 260 and the connecting rod 240. For example, a quantity and a position of the top rods 260 may be designed according to strength required by a retractable unit. This is not limited in the present disclosure. The provision of the top rod 26os can effectively strengthen the strength of each retractable unit, so as to pull the bin 810 with a certain weight.

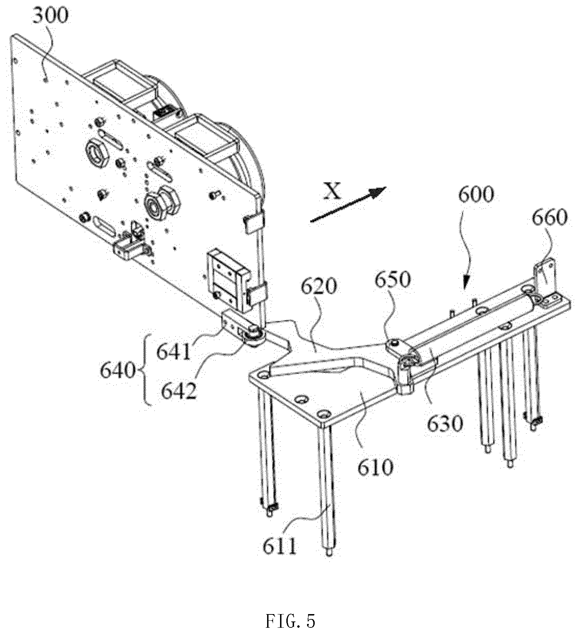

FIG. 5 is a schematic structural diagram of a pressing assembly in a transfer device according to some embodiments of the present disclosure. Referring to FIG. 5, in some embodiments of the present disclosure, the transfer device further includes a pressing assembly 600. The pressing assembly 600 selectively abuts against the fixing plate 300 to restrict the retraction and extension of the retractable mechanism 200 in the retracted state. For example, when the retractable mechanism 200 is in a retraction state, an interval between the fixing plate 300 and the mounting plate 100 is minimum. In this case, the pressing assembly 600 is just in contact with a side of the fixing plate 300 that is away from the mounting plate 100.

Because the retractable mechanism 200 includes plurality of retractable units, there may be a certain movable space in a retraction state, which causes the retractable mechanism 200 to shake in the first direction X, and may also cause that the bin 810 is not transferred in place. However, by using the pressing assembly 600, after the retractable mechanism 200 is retracted, the pressing assembly 600 abuts against the side of the fixing plate 300 that is away from the mounting plate 100, and exerts a thrust force toward the mounting plate 100 in the first direction X, so that the retractable mechanism 200 is completely retracted as a whole, thereby effectively reducing a possibility that the retractable mechanism 200 shakes, and ensuring that the bin 810 is transferred in place.

Referring to FIG. 5, in some embodiments of the present disclosure, the pressing assembly 600 includes a pressing plate 610, a pressing rod 620, an elastic member 630, and a pressing part 640. The pressing rod 620 is rotatably connected to the pressing plate 610. The elastic member 630 is disposed on the pressing plate 610 and is connected to the pressing rod 620 to restrict rotation of the pressing rod 620. The pressing part 640 is fixed to the fixing plate 300 and abuts against an end of the pressing rod 620 away from the elastic member 630 after the retracting mechanism 200 is retracted.

For example, the pressing plate 610 is disposed in a strip shape on a side of the base plate 800 close to the mounting plate 100, and plurality of support rods 611 may be disposed at a bottom of the pressing plate 610 to be fastened to the base plate 800. A U-shaped rack 650 may be fixed to a top wall of the pressing plate 610 by a bolt. An opening of the U-shaped rack 650 faces the fixing plate 300. A partial structure of the pressing rod 620 protrudes and extends into the U-shaped rack 650. A fixing rod is disposed through the U-shaped rack 650, the fixing rod passes through the partial structure of the pressing rod 620, and the pressing rod 620 is rotatably connected to the fixing rod, thereby implementing a rotational connection between the pressing rod 620 and the pressing plate 610. It should be understood that the pressing rod 620 may further be rotatably connected by using a structure such as a rotation rod disposed on the pressing plate 610. For example, the pressing rod 620 may be designed according to actual installation space, which is not limited in the present disclosure.

Referring to FIG. 5, one end of the pressing rod 620 near the fixing plate 300 is protruded from the pressing plate 610, and a structure such as a sliding slope may be disposed on a protruding side of the pressing rod 620 to better adapt to the fixing plate 300. The pressing part 640 is fastened on a side surface of the fixing plate 300 to cooperate with the side surface of the pressing rod 620. The pressing part 640 may include a pressing block 641 and a roller 642 disposed on the pressing block 641. The roller 642 abuts against the side surface of the pressing rod 620. A shape of the pressing rod 620 may be designed according to an installation space, for example, it may be a strip shape, or may be welded by plurality of pieces of blocks of different shapes. A shape of the pressing rod 620 is not limited in the present disclosure.

Referring to FIG. 5, the elastic member 630 is disposed on the pressing plate 610, and the U-shaped rack 650 is located between the elastic member 630 and the fixing plate 300. The elastic member 630 may be a pull spring, and the pull spring is disposed in the first direction X. A first end of the pull spring is connected to a pull plate 660 fastened to a bottom wall of the pressing plate 610, and a second end of the pull spring is connected to an end of the pressing rod 620 that is away from the fixing plate 300. It should be understood that the elastic member 630 may further be an elastic structure such as an elastic rod, which is not limited in the present disclosure.

When the drive assembly 500 drives the retractable mechanism 200 to extend, the fixing plate 300 drives the pressing part 640 to move in the first direction X, and the roller 642 on the pressing part 640 presses one end of the pressing rod 620 to drive the pressing rod 620 to rotate. After the pressing rod 620 is misplaced with the roller 642, a restriction of the pressing rod 620 to the fixing plate 300 may be released. When the retractable mechanism 200 is retracted, the fixing plate 300 drives the pressing block 641 to reset, and the roller 642 presses the pressing rod 620, so that the pressing rod 620 rotates to reset. When the pressing rod 620 and the roller 642 reach a position at which the dead point is balanced, one end of the pressing rod 620 presses the roller 642 under the action of the elastic member 630, so that the fixing plate 300 pushes the retractable mechanism 200 to continue to retract, so as to ensure that the retractable mechanism 200 completely retracts, and avoid a possibility that the retractable structure is shaken as a whole.

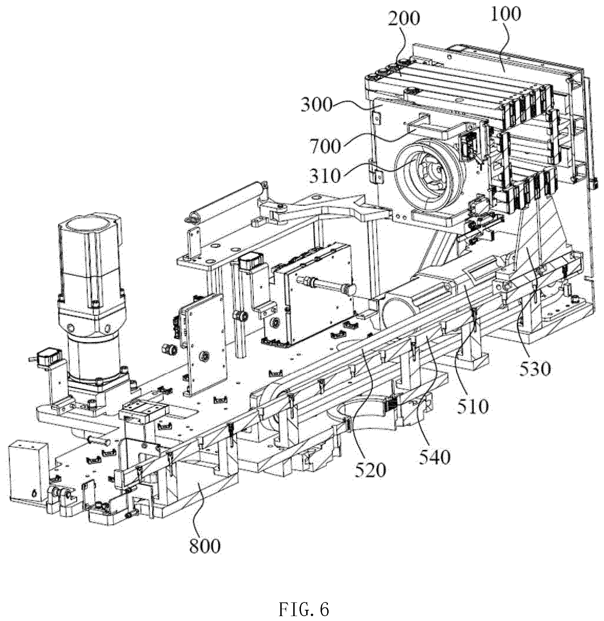

FIG. 6 is a sectional view of a transfer device according to some embodiments of the present disclosure. Referring to FIG. 6, in some embodiments of the present disclosure, the transfer device further includes a push rod 700. The push rod 700 is disposed on the fixing plate 300, and a length of the push rod 700 is less than or equal to a length of the suction cup 310. For example, the push rod 700 is fixed on the fixing plate 300 in a manner of welding, bonding, or clamping. The push rod 700 extends in the first direction X, and an end face of the push rod 700 may be slightly lower than the suction cup 310. It may be disposed plurality of push rods 700, and the plurality of push rods 700 are distributed around circumferential intervals of the suction cup 310. The two adjacent push rods 700 may also be welded or bonded to a strengthening structure such as a reinforcing plate, so as to improve strength between adjacent push rods 700. In this embodiment of the present disclosure, four push rods 700 are correspondingly disposed for each suction cup 310, two push rods 700 are disposed above the suction cup 310, and two push rods 700 are disposed below the suction cup 310. In another embodiment of the present disclosure, each suction cup 310 may also be correspondingly disposed with six or more push rods 700. For example, the push rods 700 may be designed according to a weight of the bin 810 that needs to be pushed, which is not limited in the present disclosure.

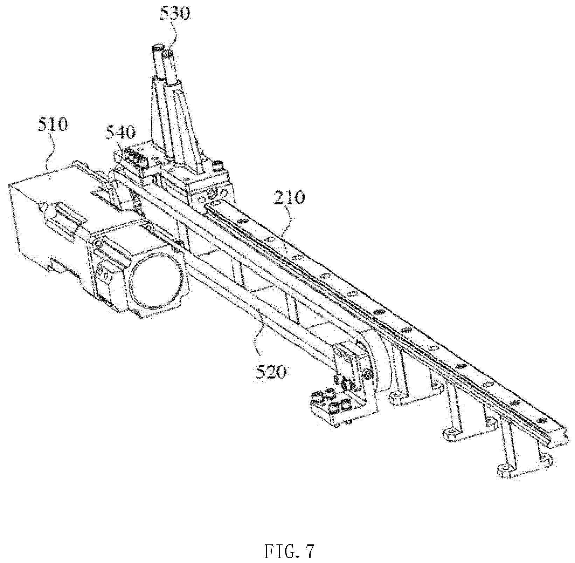

FIG. 7 is a schematic structural diagram of a drive assembly of a transfer device according to some embodiments of the present disclosure. Referring to FIG. 6 and FIG. 7, in some embodiments of the present disclosure, the drive assembly 500 includes a drive member 510, a drive chain 520, a connection block 530, and a plurality of rotary wheels 540. The drive member 510 is connected to any one of the plurality of rotary wheels 540 to drive the rotary wheel 540 to rotate. The drive chain 520 is disposed on the plurality of rotary wheels 540. The connection block 530 is disposed on the drive chain 520 and is connected to the retractable mechanism 200 to drive the retractable mechanism 200 to be extended or retracted in the first direction X.

For example, a special mounting seat is disposed on the base plate 800. A rotary rod is disposed on the mounting seat. The rotary wheels 540 are rotatably connected to the rotary rod, and the rotary wheels 540 are located on a side of the slide guide 210. The plurality of rotary wheels 540 are arranged at intervals along the first direction X. In this embodiment of the present disclosure, there are two rotary wheels 540. In another embodiment, three or more rotary wheels 540 may be disposed. For example, a quantity of rotary wheels 540 may be designed according to a degree of tightening required by the drive chain 520, which is not limited in the present disclosure. The drive chain 520 is disposed on the rotary wheels 540. It should be understood that the drive chain 520 may also be replaced by another structure, for example, a structure such as a gear rack or a screw, and is not limited to the drive chain 520 in the foregoing example. It may be considered and designed according to running stability, installation space, etc.

The drive member 510 may use a deceleration motor, and a motor shaft is coaxially connected to any rotary wheel 540 by using a coupling. In this embodiment of the present disclosure, the drive member 510 is disposed close to the mounting plate 100 and connected to the rotary wheel 540 at an edge. The connection block 530 is located below the plurality of retractable units, and the connection block 530 is slidably connected to the above of the slide guide 210. A connecting rod is disposed on the connection block 530, and the connecting rod is connected to a retractable unit.

When the retractable mechanism 200 needs to be driven to move, the drive member 510 is activated, and the drive member 510 drives a rotation wheel 540 to rotate. The rotation wheel 540 drives the drive chain 520 to rotate. With rotation of the drive chain 520, the connection block 530 slides along the slide guide 210, so as to drive the plurality of retractable units to successively extend and retract, and therefore implementing extension and retraction of the retractable mechanism 200.

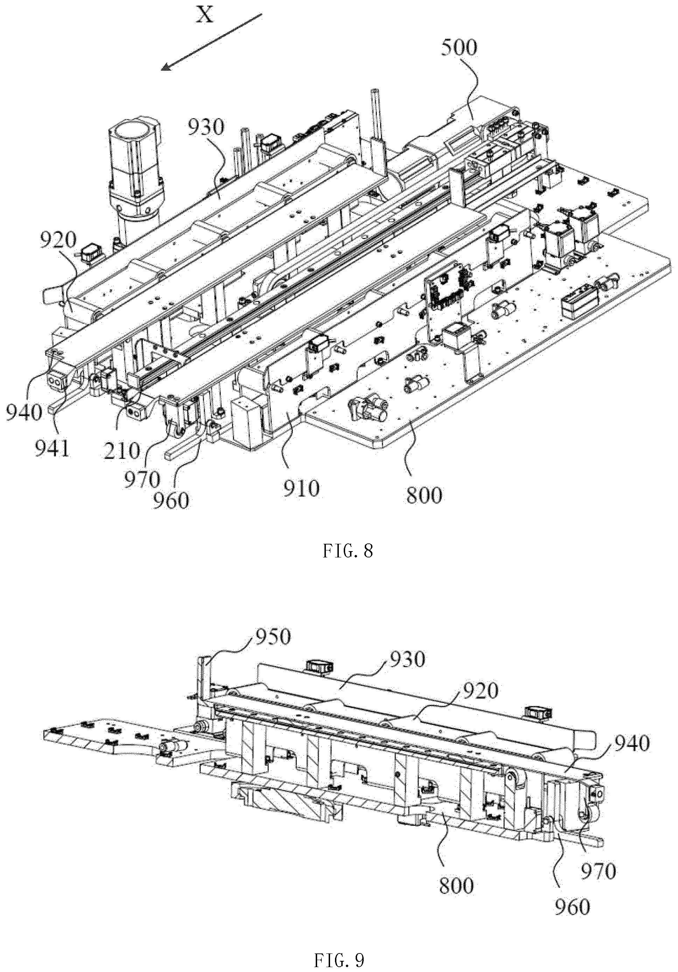

FIG. 8 is a schematic structural diagram of a support assembly in a transfer device according to some embodiments of the present disclosure. Referring to FIG. 8, in some embodiments of the present disclosure, the support assembly 900 includes a support rack 910 and plurality of support rollers 920. The support assembly 910 is disposed on the base plate 800. The plurality of support rollers 920 are rotatably connected to the support rack 910 and distributed at intervals in a first direction, and a top wall of the support roller 920 is disposed to support a bottom wall of the supported bin 810.

For example, the support assembly 910 may be in a rectangular shape, it opens at its top wall, the interior is hollow, and extends in a first direction. The support assembly 910 may be formed by a U-steel, or may be formed by successively splicing plurality of steel plates, and it is not limited in the present disclosure. The support assembly 910 may be bolted to the base plate 800, so as to facilitate adjustment of the position of the support assembly 910 on the base plate 800, thereby adapting to different bins 810. A plurality of mounting rods may be disposed in the support assembly 910. The mounting rods extend in a width direction of the mounting rods. The plurality of mounting rods are distributed at intervals in a first direction, and may be evenly spaced or unevenly spaced from each other. Each of the support rollers 920 is sleeved on the mounting rod and rotatably connected to the mounting rod, and a top of the support roller 920 projects the support rack 910, so as to facilitate the support of the bin 810. In this embodiment of the present disclosure, it is disposed four support rollers 920, and the four support rollers 920 are evenly spaced. It may be disposed two support racks 910 on two sides of the slide guide 210, respectively. The distance between the two support racks 910 is equal to or slightly greater than the width of the bin 810.

With provisions of the support roller 920 and the support rack 910, when the bin 810 is pulled out, it falls on the support roller 920. As the bin 810 gradually is pulled into the base plate 800, the bin 810 will rotate the support rollers 920 together. In this way, a friction force of the bin 810 in a pulling process can be reduced, and a load of the retractable mechanism 200 in a retractable process can be reduced.

Referring to FIG. 8, in some embodiments of the present disclosure, the support assembly 900 further includes a baffle 930. The baffle 930 is disposed on a side of the support assembly 910 and extends in a first direction. For example, the baffle 930 may be bolted to an outer wall of the support assembly 910, and the top wall is higher than the top of the support roller 920. The baffle 930 is in a rectangular thin plate shape. A material manufacturing the baffle 930 may be plastic, may be metal, or the like. A structure such as a rotor, a protective pad, or a lubrication film may be disposed on a side surface of the baffle 930, so as to restrict the bin 810 while reducing the friction between the baffle 930 and the bin 810. A height of the baffle 930 may be designed according to a size of the bin 810, which is not limited in the present disclosure.

FIG. 9 is a schematic cross-sectional structural diagram of a support assembly in a transfer device according to some embodiments of the present disclosure. Referring to FIG. 8 and FIG. 9, in some embodiments of the present disclosure, the support assembly 900 further includes a stop plate 940, a baffle plate 950, a stop rod 960, and a toggle 970. The stop plate 940 is slidably connected to the base plate 800 and has a top wall lower than the top of the support roller 920. The baffle plate 950 is fixed to the stop plate 940, and a top of the baffle plate 950 partially overlaps with a lower part of the fixing plate 300. The stop rod 960 is rotatably connected to the base plate 800 and is located on a side of the stop plate 940 away from the baffle plate 950. The toggle 970 is fixed on the stop plate 940 and selectively abuts against the stop rod 960, so that the stop rod 960 partially protrudes the stop plate 940, and a portion of the stop rod 960 protruding the stop plate 940 is opposite to the baffle plate 950.

For example, a slide track is fixedly disposed on the base plate 800. The slide track is located between the slide guide 210 and the support assembly 910, and extends in a first direction. The stop plate 940 is slidably connected to the slide track by disposing a slider on the base plate 800. The stop plate 940 is in a long strip shape as a whole, and the baffle plate 950 is disposed on a side of the stop plate 940 close to the mounting plate 100. The baffle plate 950 and the stop plate 940 may be formed integrally, or may be fixed in a welding or bonding manner. The baffle plate 950 extends in a vertical direction, and a top of the baffle plate 950 partially overlaps with a lower part of the fixing plate 300. A side of the stop plate 940 away from the baffle plate 950 is fixedly connected to an abutment block 941, and a side surface of the abutment block 941 is disposed to abut against a shelf for placing the bin 810. The toggle 970 is fixed on the side of the stop plate 940 and is arranged in parallel with the abutment block 941. The toggle 970 extends vertically downward and extends into the stop rod 960. It is disposed two stop plates 940 on two sides of the slide guide 210, and they are located between the two support racks 910.

The stop rod 960 may be L-shaped. A junction between the horizontal arm and the vertical arm of the stop rod 960 is rotably connected to the base plate 800 by means of a hinge, the stop rod 960 is hinged on a side of the base plate 800 away from the mounting plate 100. The stop rod 960 has a vertical state and a horizontal state. The vertical state is L-shaped. In this case, the upper part of the vertical arm is higher than the top wall of the stop plate 940, and corresponds to the baffle plate 950. The horizontal state is "┘" shaped. In this case, there is a gap between the vertical arm and the bottom wall of the stop plate 940. It should be understood that the coordination between the stop rod 960 and the stop plate 940 may be further implemented by using a structure such as a hinged link or a pull spring. For example, it may be designed according to actual installation space.

When the fixing plate 300 protrudes in the first direction, the fixing plate 300 pushes the baffle plate 950 to move, and the baffle plate 950 moves the stop plate 940, so that the abutment block 941 abuts against the bin 810. The toggle 970 presses the stop rod 960, so that the stop rod 960 changes from the vertical state to the horizontal state. After the bin 810 gradually enters above the stop plate 940, because the height of the stop plate 940 is lower than the support roller 920, the stop plate 940 does not directly contact the bin 810. After the bin 810 contacts the baffle plate 950, it pushes the baffle plate 950 to drive the stop plate 940 to reset, and the stop plate 940 thereby drives the toggle 970 to reset, and the toggle 970 drives the stop rod 960 to rotate, so that the stop rod 960 is transformed from a horizontal state to a vertical state, so as to clamp the bin 810 above the stop plate 940, thereby improving stability of the bin 810 on the support roller 920.

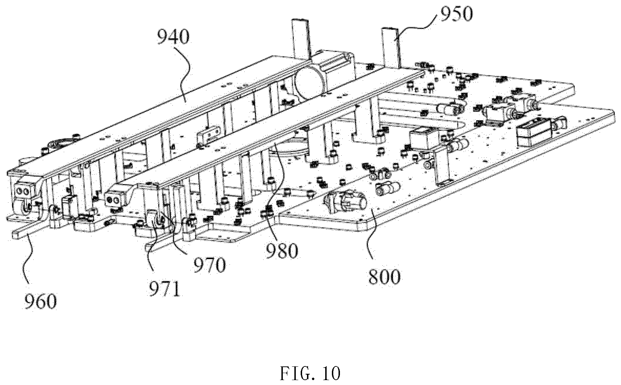

FIG. 10 is a schematic structural diagram of a stop plate and a base plate in a transfer device according to some embodiments of the present disclosure. Referring to FIG. 10, in some embodiments of the present disclosure, the support assembly 900 further includes a rolling wheel 971. The rolling wheel 971 is rotatably connected to the toggle 970 and selectively abuts against the stop rod 960. For example, the rolling wheel 971 is rotatably connected to an end of the toggle 970 away from the stop plate 940 by using a rotary rod, and a diameter thereof is greater than a width of the toggle 970. When the stop plate 940 moves, the rolling wheel 971 is driven by the toggle 970 to squeeze a side of the stop rod 960. With movement of the stop rod 960, the rolling wheel 971 rotates relative to the stop rod 960, and squeezes the stop rod 960 to rotate, so that the stop rod 960 switches between the vertical state and the horizontal state, avoiding face-to-face fit between the toggle 970 and the stop rod 960 and jamming.

Referring to FIG. 10, in some embodiments of the present disclosure, the support assembly 900 further includes an elastic stopper 980. The elastic stopper 980 is disposed on the base plate 800 and connected to the stop plate 940 to restrict the movement of the stop plate 940. For example, the elastic stopper 980 may use a pull spring. A fixing seat may be bolted on the base plate 800, and the fixing seat and the slider on the bottom wall of the stop plate 940 are arranged in a first direction. A first end of the pull spring is connected to a fixing seat, and a second end of the pull spring is connected to a slider 102 of a bottom wall of the stop plate 940. It should be understood that the elastic stopper 980 may also use an elastic structure such as an elastic rod, provided that it can restrict sliding of the stop plate 940 in the first direction, which is not limited in the present disclosure.

When the stop plate 940 moves in the first direction X, the pull spring is pulled to be elastically deformed. After the fixing plate 300 is separated from the baffle plate 950, the pull spring can pull the stop plate 940 to reset. After the bin 810 is placed on the support roller 920, the pull spring can restrict movement of the stop plate 940, thereby restricting rotation of the stop rod 960, so that the stop rod 960 keeps engaged with the tail of the bin 810.

The present disclosure further provides a transfer robot.

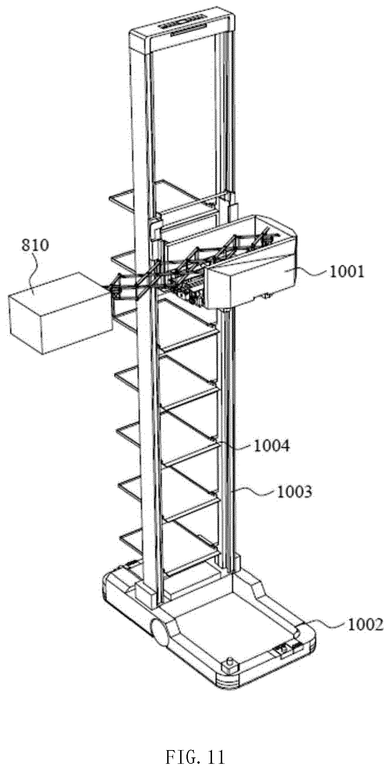

FIG. 11 is a schematic structural diagram of a transfer robot according to some embodiments of the present disclosure. Referring to FIG. 11, the transfer robot includes a mounting rack 1001 and a transfer device in any one of the foregoing embodiments. The transfer device is disposed on the mounting rack 1001. For example, the mounting rack 1001 may be driven by using a special driving mechanism, so as to move the transfer device, and therefore, the transfer device can correspond to the bin 810 at any location, so as to transfer the bin 810. When transferring the bin 810 by using the transfer robot, the bin 810 may be taken out from the shelf by suctioning a side surface of the bin 810, so that when storing the bins 810, there is no need to reserve too much space between the bins. Therefore, a space in the warehouse is effectively saved, space utilization in the warehouse is greatly improved, and a storage capacity of a unit area in the warehouse is effectively improved.

Because the foregoing transfer robot includes the foregoing transfer device, the transfer robot has all technical effects of the transfer device. Details are not described herein again.

In some embodiments of the present disclosure, the transfer robot further includes a moving mechanism and a control module. The mounting rack 1001 is disposed on the moving mechanism, and the moving mechanism is disposed to move the mounting rack 1001, so as to move the transfer device to a specified position. The control module is communicatively connected to the moving mechanism and the transfer device to control operations of the moving mechanism and the transfer device.

For example, the moving mechanism may include movement in a vertical direction and a horizontal direction, and the movement in the horizontal direction may be divided into forward, backward, left, right, and the like to rotate and move 360 degrees at a horizontal level. The movement in the vertical direction may be realized by a screw or sprocket chain in conjunction with a drive unit. It should be understood that the composition of the moving mechanism may be comprehensively considered and designed according to actual production costs, a running site, a support capability, and the like, provided that the foregoing movement can be implemented.

The control module may include a controller and plurality of sensors. The plurality of sensors may separately detect a position of the moving mechanism, a height of the mounting rack 1001, an extending length of the retractable mechanism 200, a weight of the transfer device, and the like. The sensors detect the corresponding signals and transmit them to the controller, and the controller may determine a status of the transfer robot according to the signals. The control module may further include a camera. The camera can capture an image and transmit the image to the controller. The controller analyzes and processes the image, so as to obtain corresponding information to generate a corresponding control signal.

For example, when the position signal of the moving mechanism is obtained, a distance of the moving mechanism relative to the bin 810 to be transferred may be calculated by using an internal program, so as to control the moving mechanism to move a certain distance in a specified direction. After moving to a specified position, height information of the mounting rack 1001 may be obtained, so as to determine a height difference between the bin 810 and the suction cup 310, and therefore controlling the moving mechanism to drive the retractable mechanism 200 to rise or fall in a vertical direction, so that the suction cup 310 corresponds to the bin 810. By detecting the length of the retractable mechanism 200, it can be determined whether the bin 810 is pulled out of the shelf 400. By detecting the weight of the transfer device, it may be determined whether the bin 810 has been stably placed on the support assembly 900 or the like. For example, the control instruction of the control module may be designed according to an applied site required by an actual transfer robot. The control logic is not limited in the present disclosure.

Referring to FIG. 11, in some embodiments of the present disclosure, the moving mechanism further includes a mobile trolley 1002, a fixing rack 1003, and an elevation mechanism. The mobile trolley 1002 includes a translation mechanism, and the translation mechanism is configured to drive the mobile trolley 1002 to move in a plane. The fixing rack 1003 is fixed to the mobile trolley 1002, and the mounting rack 1001 is slidably connected to the fixing rack 1003. The elevation mechanism is disposed on the fixing rack 1003 and connected to the mounting rack 1001 to drive the mounting rack 1001 to slide.

For example, the mobile trolley 1002 is in a cubic shape. An overall body of the mobile trolley 1002 may be a hexahedron such as a cuboid. A corresponding translation mechanism is disposed inside the mobile trolley 1002. The translation mechanism may include a servo motor, a power supply, a reduction box, a universal wheel, and a drive assembly, etc. The translation mechanism may drive the mobile trolley 1002 to move back and forth on the ground and rotate in an in-situ manner, and a rotation direction may be 360 °. It should be understood that the mobile trolley 1002 may also be a cylindrical or another polygon, for example, it may be designed according to an actual application scenario.

The fixing rack 1003 is in a Π shaped, bottoms of its two vertical arms are fixed to a top wall of the mobile trolley 1002, and the mounting rack 1001 and the two vertical arms are slidably connected by using a structure such as a slider. The elevation mechanism is disposed inside the fixing rack 1003. The elevation mechanism may consist of a structure such as a motor, a sprocket, a chain or a motor, a gear, and a screw. The elevation mechanism is connected to the slider to drive the slider to slide, thereby driving the mounting rack 1001 to slide up and down on the fixing rack 1003. It should be understood that configurations of the elevation mechanism may be designed according to actual installation space, provided that the mounting rack 1001 can be driven to be steadily elevated and lowered. The present disclosure does not limit the configurations of the elevation mechanism.

When the transfer robot operates, the mobile trolley 1002 moves on a plane by using the translation mechanism, so as to move the fixing rack 1003 and the transfer device to a location close to the bin 810. The elevation mechanism can drive the mounting rack 1001 to up and down on the fixing rack 1003, so that the transfer device can be opposite to the bin 810, and therefore the transfer device can fix the bin 810.

In some embodiments of the present disclosure, the transfer robot further includes a rotation mechanism and a plurality of storage plates 1004. The plurality of storage plates 1004 are disposed on the moving mechanism. The rotation mechanism is disposed on the mounting rack 1001, and the rotation mechanism is configured to drive the transfer device to rotate, so that the transfer device stores the bin 810 on the storage plate 1004.

For example, the storage plate 1004 is fixed to the fixing rack 1003, and the plurality of storage plates 1004 are distributed at intervals in a vertical direction. A size of the storage plate 1004 may be designed according to a size of the bin 810. For example, a quantity of the storage plates 1004 may be adjusted according to an actual application, which is not limited in the present disclosure. It should be understood that, to adapt to the different sizes of the bins 810, the storage plate 1004 may also be detachably connected to the fixing rack 1003, so as to replace the storage plates 1004 of different sizes. A cross-section of the storage plate 1004 may be a rectangular plate-like structure. A protective film, such as a lubrication film, may be disposed on a top wall of the storage plate 1004, so as to reduce friction between the bin 810 and the storage plate 1004. A stop sleeve may further be disposed on the top wall of the storage plate 1004, and the stop sleeve is in a "U" shape, so as to restrict the movement of the bin 810.

The rotation mechanism may use a motor as a power output structure, and then cooperate with a transmission structure such as a gear to implement rotation of the transfer device. The configuration of the rotation mechanism is not limited in the present disclosure.

When the transfer robot transfers the bin 810, the transfer device removes the bin 810 from the shelf 400, and drives the transfer device to rotate by using a rotation mechanism, so that the transfer device faces the storage plate 1004, and pushes the bin 810 onto the storage plate 1004, so that the bin 810 may be temporarily stored on the storage plate 1004. In this way, the plurality of bins 810 may be stored on different storage plates 1004 at the same time, and the bins 810 move with movement of the transfer robot, so as to quickly complete transport of the bins 810.

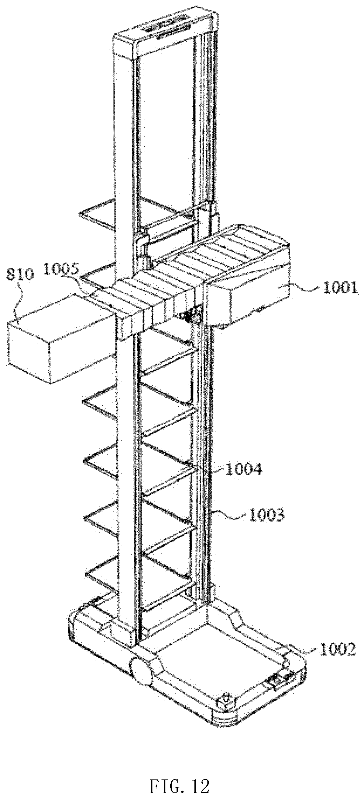

FIG. 12 is a schematic structural diagram of a transfer robot with a dust cover in some embodiments of the present disclosure. Referring to FIG. 12, in some embodiments of the present disclosure, the transfer robot further includes a dust cover 1005. The dust cover 1005 is disposed on the retractable mechanism 200 of the transfer device. For example, the dust cover 1005 is made of a flexible material, such as a cloth. The dust cover 1005 is sleeved on the retractable mechanism 200, and is connected to the retractable rod 250. The dust cover 1005 can cover the gap of the retractable mechanism 200, so as to avoid accumulation of impurities, such as dust in the air, in the retractable mechanism 200.

The present disclosure further provides a warehousing system.

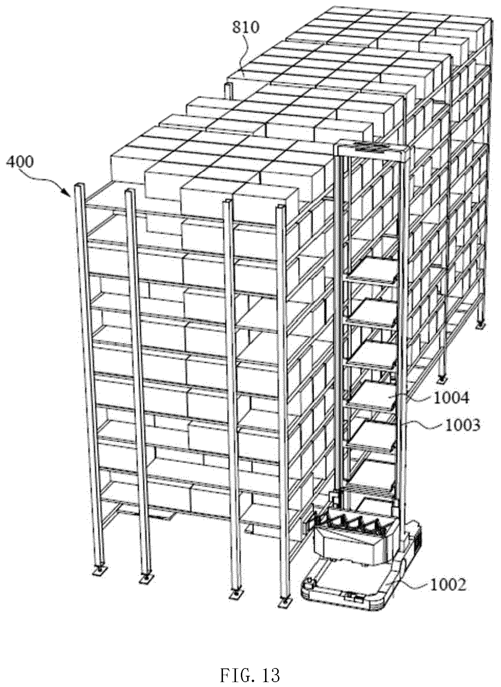

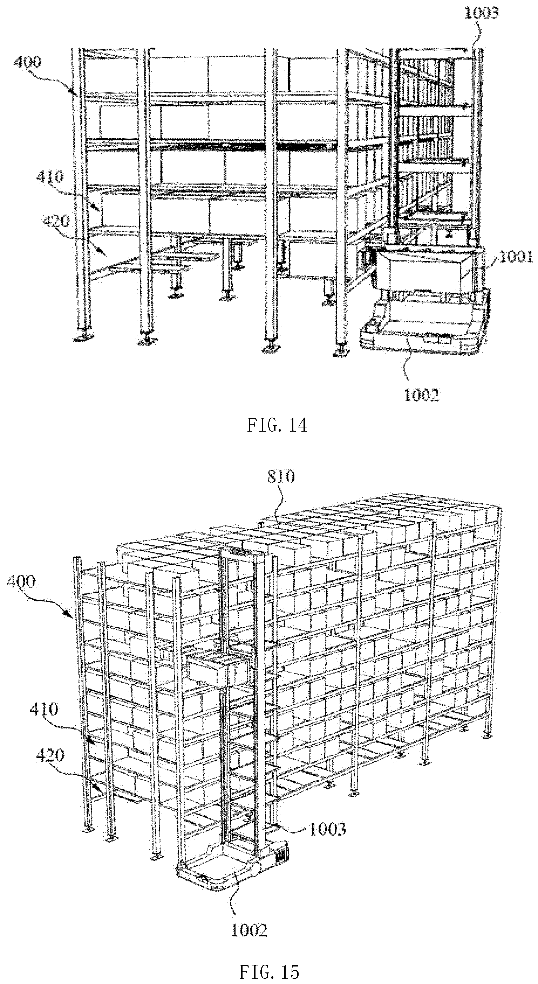

FIG. 13 is a schematic structural diagram of a warehousing system according to some embodiments of the present disclosure. FIG. 14 is an enlarged schematic diagram of a partial structure in a warehousing system according to some embodiments of the present disclosure. Referring to FIG. 13 and FIG. 14, the warehousing system includes a warehouse and a transfer robot in any one of the foregoing embodiments. The transfer robot is disposed in the warehouse.

For example, an accessible area and a storage area may be disposed in a warehouse, and plurality of storage areas may be disposed. Plurality of shelves 400 may be disposed in the storage area, plurality of bins 810 may be densely arranged in the shelf 400. The accessible area runs through plurality of storage areas. The transfer robot is moved in the accessible area.

With this warehousing system, the bins 810 may be densely arranged in the warehouse when being stored. The transfer robot can move in the accessible area, so as to transfer a specified bin 810 by suctioning a side of the bin 810. Therefore, when the bins 810 are stored in the warehouse, it is not necessary to reserve relatively large space, thereby effectively saving an area in the warehouse, and effectively increasing a storage capacity per unit area in the warehouse.

Because the foregoing warehousing system includes the foregoing transfer robot, the warehousing system has all technical effects of the transfer robot, and details are not described herein again.

FIG. 15 is a schematic structural diagram of a shelf of a warehousing system according to some embodiments of the present disclosure. Referring to FIG. 14 and FIG. 15, in some embodiments of the present disclosure, the warehousing system further includes shelves 400. The shelf 400 includes a cache layer 420 and a plurality of storage layers 410. A plurality of bins 810 are densely disposed in the storage layers 410. A transfer robot is configured to transfer the bins 810 on the storage layer 410 to the cache layer 420.

For example, the shelf 400 may be a frame structure formed by a plurality of longitudinal rods and a plurality of transverse rods interleaved in longitudinal and transverse directions. The shelf 400 may be separated into a plurality of layers in a vertical direction, and each layer is separated into a plurality of spaces used to store the bins 810. A bottom wall of each storage layer 410 is in a plate shape, and the bottom wall of the storage layer 410 may be directly mounted on the transverse rod and the longitudinal rod on the shelf 400, so as to support the bin 810. A strip-shaped partitioning thin plate may be disposed on the storage layer 410, so as to separate the two bins 810 from each other, thereby avoiding friction between the bins 810. A size of space may be correspondingly designed according to a size of the bin 810. For example, a quantity and a size of the shelf 400 may be designed according to a size of a warehouse, which is not limited in the present disclosure. The cache layer 420 may be disposed at a lowest layer of the shelf 400, and is located below the storage layer 410. It is a belt transport mechanism or a movable transport mechanism inside the cache layer 420. After the transfer device places the bin 810 at the cache layer 420, it may automatically transport the bin 810 to a specified location. It should be understood that the cache layer 420 may not be disposed with a transport device, and may be separately used as a standby layer, so that the to-be-used bin 810 is placed in the layer. A function of the cache layer 420 is not limited in the present disclosure.

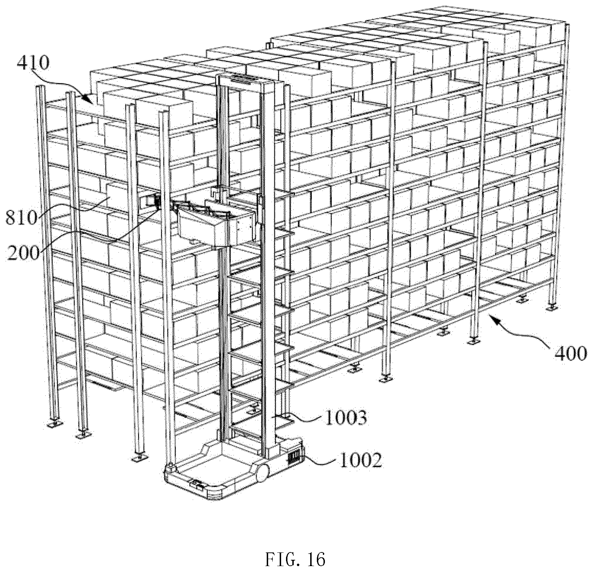

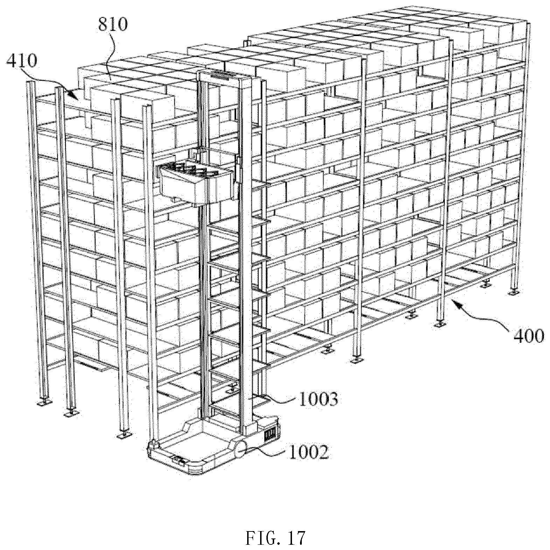

FIG. 16 is a schematic structural diagram of a relatively long extension length of a retractable mechanism in a warehousing system according to some embodiments of the present disclosure. FIG. 17 is a schematic structural diagram of a relatively short extension length of a retractable mechanism in a warehousing system according to some embodiments of the present disclosure. Referring to FIG. 16 and FIG. 17, in some embodiments of the present disclosure, a transfer robot in a warehousing system may be classified into a plurality of types according to a maximum length that can be extended by a retractable mechanism 200, so as to correspond to bins 810 of different depths on the shelf 400. For example, the transfer robot may be classified into two types. One type of retractable mechanism 200 has a relatively long extension length, and may be disposed to transfer and move the bin 810 deep in the shelf 400. The other type of retractable mechanism 200 has a relatively short extension length, and is disposed to transfer and move the bin 810 near the shelf 400. The two types of the transfer robots may operate at the same time, so as to meet various requirements of a user, thereby greatly improving a transfer speed of the bins 810 in a warehousing system.

In some embodiments of the present disclosure, the warehousing system further includes a background system. The background system is communicatively connected to the shelf 400 and the transfer robot, so as to generate a corresponding control instruction according to a location of the bin 810 in the shelf 400 and a location of the transfer robot. For example, the background system includes a central control module and a plurality of monitoring units disposed in a warehouse, and the monitoring unit may be a camera and a sensor. The camera is configured to monitor a location of a transfer robot in a warehouse, a transferring condition of the bins 810, and the like. The sensor may be configured to identify a location of a shelf 400, and cooperate with the transfer robot to obtain a relative distance between the transfer robot and the shelf 400. A Radio Frequency Identification (RFID) may further be disposed on each bin 810, and a location of the bin 810 in a warehouse may be remotely monitored by using the central control module. The central control module may further provided with a corresponding operation module, and an operator may input various instructions by using the operation module to control movement of the transfer robot, so as to accurately transfer the specified bin 810. It should be understood that another module may be provided in the background system to adapt to different types of warehouses, such as a temperature detection adjustment module and an air quality adjustment module, and etc. The present disclosure does not limit a function of the background system.

In the present disclosure, when a bin is being transferred by the transfer device, a base plate is moved to place a mounting plate close to the bin. The retractable mechanism is driven to extend by using a drive assembly, so as to push a suction cup closer to the bin. After the suction cup is abutted against the bin, a side of the bin is suctioned by the suction cup. Then a retractable mechanism is driven to retract by using the drive assembly, so as to pull the bin out. The bin is placed on a support assembly, and then be moved by moving the base plate, so as to transfer the bin to a specified position. In this way, by means of cooperation of a drive assembly, a retractable mechanism, and a suction cup, a side of the bin is suctioned, so as to complete the transfer of the bin. Therefore, it is not necessary to reserve a gap used for clamping the bin during placement of the bin, and only a specific interval needs to be provided between adjacent bins. In this way, storage density of the bins in a warehouse is increased, and a storage volume per unit area is increased, thereby effectively improving utilization of warehouse space.

In the present disclosure, when a bin is being transferred by using the transfer robot, the bin may be transferred by suctioning a side of the bin, so that a large spacing does not need to be reserved for storage of the bin, space in the warehouse is effectively saved, space utilization in the warehouse is greatly improved, and a storage capacity per unit area in the warehouse is effectively increased.

In the present disclosure, by using the warehousing system, the bins may be densely arranged in the warehouse when being stored. The transfer robot can transfer the bin through a side of the bin, so that a relatively large space does not need to be reserved when the bins are stored in the warehouse, thereby effectively saving an area in the warehouse, and effectively increasing a storage capacity per unit area in the warehouse.

## Claims

1. A transfer device, comprising:
a base plate (800);
a mounting plate (100) disposed on the base plate (800);
a retractable mechanism (200) disposed on the mounting plate (100) and retractable along a first direction (X);
a fixing plate (300) disposed on a side of the retractable mechanism (200) away from the mounting plate (100);
suction cups (310) disposed on the fixing plate (300) for suctioning a bin (810);
a drive assembly (500) disposed on the base plate (800) and connected to the retractable mechanism (200) to drive the retractable mechanism (200) to be retractable; and
a support assembly (900) disposed on the base plate (800) to support a bin (810) suctioned by the suction cup (310).

2. The transfer device according to claim 1, wherein the retractable mechanism (200) comprises:
a slide guide (210) extending in the first direction (X); and
a plurality of retractable units, wherein the plurality of retractable units are slidably connected to the slide guide (210), and two adjacent retractable units are hinged, the plurality of retractable units are divided into a plurality of first retractable units (220) and two second retractable units (230), the plurality of first retractable units (220) are located between the two second retractable units (230), one of the second retractable units (230) is movably connected to the mounting plate (100), and the other second retractable unit (230) is movably connected to the fixing plate (300).

3. The transfer device according to claim 2, wherein each of the retractable units comprises:
two retractable racks disposed opposite to each other, and each of the retractable racks comprises a first side part (2201) and a second side part (2202) that are staggered; and
a connecting rod (240) disposed on the first side parts (2201) of the retractable racks, and hinged to the second side parts (2202) of adjacent retractable racks.

4. The transfer device according to claim 3, wherein the first side part (2201) and the second side part (2203) respectively comprise a retractable rod (250), and the retractable rack comprises:
two retractable rods (250) interleaved and connected rotatably, one connecting rod (240) is disposed at one end of each of the retractable rods (250), the other end of the retractable rod (250) is hinged to the connecting rod (240) of the adjacent retractable unit, and two connecting rods (240) at two ends of the retractable rod (250) are respectively located on two sides of the slide guide (210).

5. The transfer device according to claim 3, wherein the second retractable unit (230) further comprises:
a diagonal rod (231), one end of the diagonal rod (231) is hinged to the fixing plate (300) or the mounting plate (100), and the other end of the diagonal rod (231) is hinged to the retractable rack.

6. The transfer device according to claim 5, wherein the second retractable unit (230) further comprises:
a straight rod (232) disposed between the two opposite retractable racks;
a sleeve (233) disposed on the straight rod (232) and rotatably connected to the straight rod (232), an end wall of the diagonal rod (231) is fixedly connected to the sleeve (233).

7. The transfer device according to claim 5 or 6, wherein the retractable unit further comprises:
a top rod (260) disposed between the two retractable racks.

8. The transfer device according to any one of claims 1 to 7, further comprising at least one of the following:
a pressing assembly (600) that selectively abuts against the fixing plate (300) to restrict the retraction and extension of the retractable mechanism (200) in a retracted state;
a push rod (700) disposed on the fixing plate (300), and a length of the push rod (700) is less than or equal to a length of the suction cup (310).

9. The transfer device according to claim 8, wherein the pressing assembly (600) comprises:
a pressing plate (610);
a pressing rod (620) that is rotatably connected to the pressing plate (610);
an elastic member (630) disposed on the pressing plate (610) and connected to the pressing rod (620) to restrict rotation of the pressing rod (620); and
a pressing part (640) fixed to the fixing plate (300), the pressing part (640) abuts against an end of the pressing rod (620) away from the elastic member (630) after the retracting mechanism (200) is retracted.

10. The transfer device according to claim 1, wherein the drive assembly (500) comprises:
a plurality of rotary wheels (540);
a drive member (510) connected to any one of the plurality of the rotary wheels (540) to drive the rotary wheel (540) to rotate;
a drive chain (520) disposed on the plurality of the rotary wheels (540); and
a connection block (530) disposed on the drive chain (520) and connected to the retractable mechanism (200) to drive the retractable mechanism (200) to be extended or retracted in the first direction.

11. The transfer device according to any one of claims 1 to 6, wherein the support assembly (900) comprises:
a support rack (910) disposed on the base plate (800);
a plurality of support rollers (920) that are rotatably connected to the support rack (910) and distributed at intervals in the first direction, wherein a top wall of the support roller (920) is disposed to support a bottom wall of the bin (810).

12. The transfer device according to claim 11, wherein the support assembly (900) further comprises:
a stop plate (940) that is slidably connected to the base plate (800), a top wall of the stop plate (940) is lower than a top of the support roller (920);
a baffle plate (950) fixed to the stop plate (940), the baffle plate (950) partially overlaps with the fixing plate (300);
a stop rod (960) rotatably connected to the base plate (800) and located on a side of the stop plate (940) away from the baffle plate (950); and
a toggle (970) fixed on the stop plate (940) and selectively abutting against the stop rod (960), so that the stop rod (960) partially protrudes the stop plate (940), a portion of the stop rod (960) protruding the stop plate (940) is opposite to the stop plate (950).

13. The transfer device according to claim 12, wherein the support assembly (900) further comprises at least one of the following:
an elastic stopper (980) disposed on the base plate (800) and connected to the stop plate (940) to restrict movement of the stop plate (940);
a rolling wheel (971) rotatably connected to the toggle (970) and selectively abutting against the stop rod (960);
a baffle (930) disposed on a side of the support assembly (910) and extending in the first direction.

14. A transfer robot, comprising:
a mounting rack (1001); and
the transfer device according to any one of claims 1 to 13, wherein the transfer device is disposed on the mounting rack (1001).

15. The transfer robot according to claim 14, further comprising:
a moving mechanism, wherein the mounting rack (1001) is disposed on the moving mechanism, and the moving mechanism is configured to drive the mounting rack (1001) to move, so as to move the transfer device to a specified location; and
a control module communicatively connected to the moving mechanism and the transfer device, so as to control operations of the moving mechanism and the transfer device.

16. The transfer robot according to claim 15, wherein the moving mechanism further comprises:
a mobile trolley (1002), where the mobile trolley (1002) includes a translation mechanism, and the translation mechanism is configured to drive the mobile trolley (1002) to move in a plane;
a fixing rack (1003) fixed to the mobile trolley (1002), and the mounting rack (1001) is slidably connected to the fixing rack (1003); and
an elevation mechanism disposed on the fixing rack (1003) and connected to the mounting rack (1001) to drive the mounting rack (1001) to slide.

17. The transfer robot according to claim 14, further comprising at least one of the following:
a plurality of storage plates (1004) disposed on the moving mechanism;
a rotation mechanism disposed on the mounting rack (1001) and configured to drive the transfer device to rotate, so that the transfer device stores the bin (810) on the storage plate (1004);
a dust cover (1005) disposed on a retractable mechanism (200) of the transfer device.

18. A warehousing system, comprising:
a warehouse;
the transfer robot according to any one of claims 14 to 17, wherein the transfer robot is disposed in the warehouse.

19. The warehousing system according to claim 18, further comprising:
a shelf (400) including a cache layer (420) and a plurality of storage layers (410), a plurality of bins (810) are densely disposed in the storage layers (410), and the transfer robot is configured to transfer the bins (810) on the storage layers (410) to the cache layer (420).

20. The warehousing system according to claim 19, further comprising:
a background system communicatively connected to the shelf (400) and the transfer robot, so as to generate a corresponding control instruction according to a location of the bin (810) in the shelf (400) and a location of the transfer robot.
